# EUROPÄISCHE PATENTSCHRIFT

(11) **EP 3 478 548 B1**
(45) Veröffentlichungstag und Bekanntmachung des Hinweises auf die Patenterteilung: **01.04.2020**
(21) Anmeldenummer: 17768088.1
(22) Anmeldetag: 13.09.2017
(51) Int. Cl.: B60W 40/08, B60K 28/06

(54) **VERFAHREN ZUM BETRIEB EINES KRAFTFAHRZEUGS**
METHOD FOR OPERATING A MOTOR VEHICLE
PROCÉDÉ POUR FAIRE FONCTIONNER UN VÉHICULE AUTOMOBILE

(30) Priorität: 16.09.2016 DE 102016217779
(43) Veröffentlichungstag der Anmeldung: 08.05.2019
(73) Patentinhaber: Audi AG, 85045 Ingolstadt (DE)
(72) Erfinder: SIPPL, Christoph, 93176 Beratzhausen (DE)
(86) Internationale Anmeldenummer: PCT/EP2017/072988
(87) Internationale Veröffentlichungsnummer: WO 2018/050680

(56) Entgegenhaltungen:
- WO-A1-2011/111056
- DE-A1-102009 016 936
- DE-A1-102011 109 618
- US-B1- 9 224 294
- US-B1- 9 599 986

## Beschreibung

Die Erfindung betrifft ein Verfahren zum Betrieb eines Kraftfahrzeugs, wobei eine Zustandsinformation, die einen Zustand eines Insassen des Kraftfahrzeugs betrifft, ermittelt wird, wonach das Kraftfahrzeug bei Erfüllung einer von der Zustandsinformation abhängenden Freigabebedingung vollautomatisiert zu einer vorgegebenen Zielposition geführt wird. Daneben betrifft die Erfindung ein Kraftfahrzeug.

Es ist bekannt, in Kraftfahrzeugen Einrichtungen vorzusehen, die Vitalparameter eines Fahrzeuginsassen überwachen. Beispielsweise offenbart die Druckschrift DE 10 2011 109 564 A1, ein Fahrzeug in Abhängigkeit dieser Vitalparameter automatisch an einem Fahrbahnrand abzustellen beziehungsweise es autonom zu einer nächstgelegenen Nothilfeeinrichtung zu steuern, beispielsweise der Notaufnahme eines Krankenhauses.

Aus der Druckschrift DE 10 2013 016 436 A1 ist es bekannt, ein Kraftfahrzeug bei einer Unfähigkeit des Fahrers zur Führung des Kraftfahrzeugs zu einem sicheren Abstellbereich zu führen. Hierbei ist es auch möglich, den autonomen Fahrbetrieb direkt bis zu einem Zielort fortzusetzen, an dem eine medizinische Betreuung des Fahrers möglich ist, insbesondere bis zu einem Krankenhaus.

Eine weitere Möglichkeit, einen Fahrer in Abhängigkeit seines Zustands zu unterstützen, ist aus der Druckschrift DE 10 2014 217 453 A1 bekannt. Hierbei ist ein Server vorgesehen, der mit einem kraftfahrzeugseitigen Computer kommuniziert und nach Meldung eines beeinträchtigten Zustands des Bedieners Maßnahmen zur Unterstützung des Fahrzeugbedieners vorgibt. Beispielsweise kann der Server das Fahrzeug anweisen, in einem autonomen Modus zu einer vorab gewählten medizinischen Notfalleinrichtung oder zu einem Treffpunkt mit einem Notdienst zu fahren. Aus der Druckschrift DE10 2011 109 618 A1 ist es bekannt, eine Verfahren und eine Vorrichtung zum Betrieb eines Fahrzeuges, wobei vorgesehen ist, dass zumindest bei einer ermittelten Fahruntüchtigkeit eines Fahrers automatisch ein Eingriff in eine Brems, Lenkungs und/ oder Antriebsstrangfunktion des Fahrzeuges aktiviert wird und das Fahrzeug bis zu einem Stillstand abgebremst wird.

In Notfallsituationen ist es häufig wesentlich, einem Insassen des Kraftfahrzeugs möglichst schnell medizinische Hilfe zukommen zu lassen. Insbesondere bei Herzinfarkten oder Schlaganfällen kann jede Verzögerung einer medizinischen Hilfe potentiell nachteilig für die spätere Gesundheit eines Insassen sein. Während die genannten Vorgehensweisen bereits dazu beitragen, schnell medizinische Hilfe bereitstellen zu können, sind sie somit dennoch verbesserungswürdig.

Der Erfindung liegt somit die Aufgabe zugrunde, die entsprechenden Verfahren derart zu verbessern, dass potentiell eine schnellere medizinische Hilfe erreicht werden kann.

Diese Aufgabe wird erfindungsgemäß dadurch gelöst, dass bei einem Verfahren der eingangs genannten Art das Kraftfahrzeug bei Erfüllung der Freigabebedingung unabhängig von wenigstens einer Verkehrsregel, die den Fahrbetrieb des Kraftfahrzeugs bei Nichterfüllung der Freigabebedingung einschränkt, oder in Abhängigkeit einer modifizierten Fassung dieser Verkehrsregel geführt wird.

Erfindungsgemäß wird somit vorgeschlagen, im Rahmen der vollautomatisierten Führung zu der Zielposition dann, wenn eine entsprechende Freigabebedingung erfüllt ist, also insbesondere in Notfallsituationen, ein Brechen beziehungsweise Modifizieren bestimmter Verkehrsregeln zu erlauben. Beispielsweise kann es in diesem Fall ermöglicht werden, dass das Kraftfahrzeug im Rahmen der vollautomatisierten Führung, soweit das die Verkehrssituation erlaubt, Geschwindigkeitsbegrenzungen überschreitet, rote Ampeln und/oder Stoppschilder überfährt, entgegen von Einbahnstraßen fährt, in Überholverboten überholt und Ähnliches. Beispielsweise können im Rahmen der vollautomatisierten Führung dem Kraftfahrzeug ähnliche Rechte eingeräumt werden, wie sie einem Rettungswagen bei einer Fahrt mit Sonderrechten, also bei einer Blaulichtfahrt, eingeräumt würden. Hierdurch kann eine Zielposition und somit eine medizinische Hilfe in Notsituationen, schneller erreicht werden.

Bei Nichterfüllung der Freigabebedingung soll die Führung des Kraftfahrzeugs derart erfolgen, dass die Verkehrsregel eingehalten wird. Die Einhaltung der Verkehrsregel kann, insbesondere bei einer assistierten, teilautomatisierten oder hoch- beziehungsweise vollautomatisierten Führung des Kraftfahrzeugs durch technische Maßnahmen sichergestellt werden. Beispielsweise kann derart in die Längsführung des Kraftfahrzeugs eingegriffen werden, dass vorgegebene Maximalgeschwindigkeiten nicht überschritten werden, ein automatisches Stoppen des Kraftfahrzeugs in bestimmten Verkehrssituationen, beispielsweise an roten Ampeln, erfolgt oder Ähnliches. Soweit eine Führung des Kraftfahrzeugs manuell erfolgt beziehungsweise soweit ein Übersteuern von Fahreingriffen durch einen Fahrer möglich ist, sind die entsprechenden Verkehrsregeln selbstverständlich durch den Fahrer einzuhalten. Die Verkehrsregeln können beispielsweise durch Rechtsnormen oder durch Straßenschilder, Wechsellichtzeichen, Ampeln oder dergleichen vorgegeben sein.

Die Freigabebedingung kann insbesondere auswerten, inwieweit ein Fahrer voraussichtlich fahrfähig ist und/oder wie zeitkritisch eine Bereitstellung von medizinischer Hilfe für einen Fahrer ist. Hierdurch kann erreicht werden, dass eine Freigabe für das Brechen der Verkehrsregeln nur dann erfolgt, wenn tatsächlich eine Notsituation vorliegt. Die Freigabebedingung kann zusätzlich von weiteren Randbedingungen abhängen, beispielsweise davon, wie lange es dauern würde, medizinische Hilfe an einer momentanen Position des Kraftfahrzeugs bereitzustellen. Dies kann beispielsweise davon abhängen, wo sich Rettungsfahrzeuge im Umfeld des Kraftfahrzeugs befinden.

Die Freigabebedingung kann durch eine Steuereinrichtung des Kraftfahrzeugs ausgewertet werden. Besonders vorteilhaft ist es jedoch, wenn die Freigabebedingung fahrzeugextern, beispielsweise in einer Zentraleinrichtung, insbesondere in einer Rettungsleitstelle ausgewertet wird. Die Freigabebedingung kann automatisiert, beispielsweise durch eine Recheneinrichtung, ausgewertet werden. Es ist jedoch auch möglich, dass die Erfüllung der Freigabebedingung von Bedieneingaben eines Nutzers abhängt. Diesem kann die Zustandsinformation zumindest teilweise zugänglich gemacht werden, insbesondere visualisiert werden und/oder akustisch ausgegeben werden, wonach dieser entscheiden kann, ob die Freigabebedingung erfüllt ist beziehungsweise ob eine Teilbedingung erfüllt ist, von deren Erfüllung die Freigabebedingung abhängt.

In einem einfachen Beispiel kann die Zustandsinformation eine im Rahmen eines Notrufs gesprochene Sprachnachricht des Insassen sein. Beispielsweise kann der Insasse einen telefonischen Notruf durch eine kraftfahrzeugseitige Kommunikationseinrichtung oder eine mobile Kommunikationseinrichtung auslösen. Ein Auswerter kann diese Sprachnachricht auswerten, unter Umständen Rückfragen an den Insassen stellen und bewerten, ob ein Notfall vorliegt. Liegt ein entsprechender Notfall vor, kann dies bereits zur Auslösung der Freigabebedingung ausreichen. Zusätzlich kann jedoch manuell oder automatisiert überprüft werden, ob eine vollautomatische Führung des Kraftfahrzeugs zur Zielposition, beispielsweise zu einem Krankenhaus, tatsächlich zweckmäßig ist oder ob es beispielsweise vorteilhafter wäre, einen Krankenwagen zur aktuellen Kraftfahrzeugposition zu führen, womit keine Freigabe an das Kraftfahrzeug erfolgen soll. Alternativ oder ergänzend ist es möglich, dass zur Auswertung der Freigabebedingung Sensordaten, beispielsweise von Vitaldaten des Insassen erfassenden Sensoren, erfasst und im Rahmen der Freigabebedingung ausgewertet werden. Dies kann manuell, vollautomatisiert oder teilautomatisiert erfolgen. Verfahren zur Erfassung und Auswertung entsprechender Sensordaten sind im Stand der Technik bekannt, beispielsweise aus den eingangs genannten Druckschriften, und sollen daher nicht detailliert erläutert werden.

Die Bezeichnung der verschiedenen Automatisierungsgrade für ein Kraftfahrzeug erfolgt in der vorliegenden Anmeldung gemäß jenen Bezeichnungen, die von der Bundesanstalt für Straßenwesen im Artikel "Rechtsfolgen zunehmender Fahrzeugautomatisierung", Forschung kompakt 11/12, veröffentlicht wurden. Hierbei erfolgt bei einem assistierten Betrieb nur eine Quer- oder Längsführung des Kraftfahrzeugs. Bei einer Teilautomatisierung übernimmt ein Kraftfahrzeugsystem sowohl die Quer- als auch die Längsführung. Hierbei ist jedoch eine dauerhafte Überwachung des Systems durch einen Fahrer erforderlich. Bei einer Hoch- und Vollautomatisierung ist eine derartige dauerhafte Überwachung nicht erforderlich. Der Unterschied zwischen diesen beiden Automatisierungsgraden ist, dass bei einer Vollautomatisierung stets sichergestellt sein muss, dass das System das Kraftfahrzeug ohne einen Fahrereingriff in einem risikominimalen Systemzustand zurückführen kann, beispielsweise das Kraftfahrzeug sicher abstellen kann. Dies ist bei einer hochautomatisierten Führung nicht erforderlich.

Die Verkehrsregel kann dauerhaft und/oder fahrsituationsbedingt eine maximal zulässige Fahrgeschwindigkeit des Kraftfahrzeugs und/oder eine Befahrbarkeit bestimmter Bereiche durch das Kraftfahrzeug und/oder ein Anhalten des Kraftfahrzeugs an bestimmten Positionen vorgeben. Die einzelnen Vorgaben können insbesondere ortsabhängig sein, also beispielsweise eine Geschwindigkeitsbegrenzung in einem befahrenen Streckenabschnitt betreffen oder ein Anhalten an bestimmten Punkten bei einem Vorhandenensein von Ampelanlagen, Stoppschildern oder in bestimmten Vorfahrtssituationen. Für bestimmte Bereiche kann die Befahrbarkeit grundsätzlich eingeschränkt sein. Beispielsweise kann die Verkehrsregel vorgeben, dass das Kraftfahrzeug nicht auf Busspuren oder durch Fußgängerzonen geführt werden darf. Die Befahrbarkeit kann jedoch auch situationsabhängig sein. Beispielsweise kann die Verkehrsregel vorgeben, dass eine Einbahnstraße nicht entgegen der Fahrtrichtung befahren werden darf oder ein situationsabhängiges Verbot des Befahrens bestimmter Bereiche kann aus einem Überholverbot resultieren. Im erfindungsgemäßen Verfahren können alle oder Teile der genannten Verkehrsregeln bei Erfüllung der Freigabebedingung gebrochen werden. Selbstverständlich erfolgt die vollautomatisierte Führung des Kraftfahrzeugs dabei derart, dass entsprechende Verkehrsregeln nur dann gebrochen werden, wenn die aktuelle Verkehrssituation dies zulässt. Das nicht Beachten beziehungsweise Modifizieren dieser Verkehrsregeln kann zu einer schnelleren Führung des Kraftfahrzeugs zu der Zielposition führen.

Die Zustandsinformation kann durch eine kraftfahrzeugseitige Einrichtung oder durch eine mobile Kommunikationseinrichtung erfasst und an eine Zentraleinrichtung übermittelt werden, wonach die Freigabebedingung durch die Zentraleinrichtung oder einen zentraleinrichtungsseitigen Auswerter überprüft wird, wobei bei Erfüllung der Freigabebedingung ein Freigabesignal an das Kraftfahrzeug übermittelt wird, wobei das Kraftfahrzeug nach Empfang des Freigabesignals unabhängig von der Verkehrsregel oder in Abhängigkeit der modifizierten Fassung der Verkehrsregel vollautomatisiert zu der Zielposition geführt wird. Dieser Fall wurde bereits eingangs diskutiert. Die Nutzung einer Zentraleinrichtung zur Auswertung der Freigabebedingung ist besonders dann vorteilhaft, wenn ein Auswerter zur Auswertung der Freigabebedingung oder einer Teilbedingung, von der diese abhängt, herangezogen wird. Wird als Zentraleinrichtung beispielsweise eine Rettungsleitstelle genutzt, kann eine Beurteilung der Zustandsinformation durch einen unabhängigen Auswerter erfolgen, der in der Beurteilung von potentiell medizinisch relevanten Zuständen von Personen erfahren ist. Die Nutzung einer Zentraleinrichtung kann jedoch auch dann vorteilhaft sein, wenn die Zustandsinformation vollständig automatisch ausgewertet wird. In diesem Fall kann die Aggregation von Informationen aus verschiedenen Quellen erleichtert sein. Beispielsweise können in der Zentraleinrichtung die Positionen beziehungsweise die Belegungen von Rettungsfahrzeugen bekannt sein, womit im Rahmen der Auswertung der Freigabebedingung besonders gut beurteilt werden kann, ob es im jeweiligen Fall überhaupt zweckmäßig ist, das Kraftfahrzeug beispielsweise zu einem Krankenhaus zu führen ob eine Führung eines anderen Helfers zu dem Kraftfahrzeug zweckmäßiger ist.

Wird eine Zentraleinrichtung genutzt, kann vorzugsweise auch die Zielposition durch die Zentraleinrichtung oder einen zentraleinrichtungsseitigen Auswerter ermittelt und an das Kraftfahrzeug übertragen werden. Beispielsweise kann in Abhängigkeit der Zustandsinformation eines von mehreren Krankenhäusern ausgewählt werden, zu dem der Insasse befördert werden soll oder es kann ermittelt werden, dass es zweckmäßig ist, das Kraftfahrzeug nicht direkt ins Krankenhaus sondern zu einem Treffpunkt mit einem Rettungsfahrzeug an einer vorgegebenen Position zu führen.

Zusätzlich zu der Zustandsinformation kann eine das Kraftfahrzeug und/oder den Insassen und/oder einen Fahrzeughalter des Kraftfahrzeugs und/oder einen Wohnort des Insassen und/oder des Fahrzeughalters identifizierende Identifikationsinformation ermittelt werden, wobei die Zielposition und/oder die Erfüllung der Freigabebedingung von der Identifikationsinformation abhängen können und/oder wobei in Abhängigkeit der Identifikationsinformation eines von mehreren Kraftfahrzeugen ausgewählt werden kann, zu dem das Freigabesignal übermittelt und das zu der Zielposition geführt werden kann.

Eine Identifikation des Kraftfahrzeugs ist besonders dann relevant, wenn zur Auswertung der Freigabebedingung eine Zentraleinrichtung genutzt wird. Die Identifikation einzelner Kraftfahrzeuge erlaubt die gleichzeitige oder sequentielle Nutzung der Zentraleinrichtung für verschiedene Kraftfahrzeuge. Eine Identifikation des jeweiligen Kraftfahrzeugs ist in Fällen einfach möglich, in denen die Zustandsinformation durch eine kraftfahrzeugseitige Einrichtung übertragen wird. In diesem Fall kann eine zugehörige Identifikationsinformation, beispielsweise ein Fahrzeug-ID oder das Kennzeichen des Kraftfahrzeugs, mit übertragen werden. Wird eine mobile Kommunikationseinrichtung zur Übertragung der Zustandsinformation genutzt, ist es beispielsweise möglich, dass der jeweilige Insasse explizit identifiziert wird und eine entsprechende Identifikation übertragen wird. Es ist jedoch auch möglich, dass zunächst eine Identifikationsinformation für die mobile Kommunikationseinrichtung ermittelt wird, die mobile Kommunikationseinrichtung einem bestimmten Nutzer zugeordnet wird und davon ausgegangen wird, dass es sich bei dem Nutzer um den Insassen handelt. Alternativ oder ergänzend ist es beispielsweise möglich, zur Identifikation des Kraftfahrzeugs eine Positionsinformation für die mobile Kommunikationseinrichtung und für das Kraftfahrzeug zu bestimmen und in Abhängigkeit der jeweiligen Positionsinformationen zu bestimmen, in welchem der Kraftfahrzeuge sich der Insasse aufhält.

Häufig ist es zweckmäßig, im Rahmen der Auswertung der Zustandsinformation zu wissen, wer der Insasse ist. Auch im Rahmen einer weiteren medizinischen Versorgung kann es vorteilhaft sein, die Identität des Insassen frühzeitig festzustellen. Neben einer expliziten Identifizierung eines Insassen ist es auch möglich, aus verschiedenen Indizien eine wahrscheinliche Identität des Insassen zu ermitteln. Beispielsweise kann angenommen werden, dass es sich bei dem Insassen um den Fahrzeughalter des identifizierten Kraftfahrzeugs oder einen registrierten Nutzer der mobilen Kommunikationseinrichtung handelt. Eine andere Möglichkeit den Insassen zu identifizieren ist, dass es sich bei dem Insassen um den Fahrer des Kraftfahrzeugs handelt, wobei beispielsweise ein personalisierter Fahrzeugschlüssel genutzt wird oder der Fahrer ein entsprechendes Fahrerprofil auswählt, um sich gegenüber dem Kraftfahrzeug zu identifizieren. Wohnorte können beispielsweise gemeinsam mit Bewegungsprofilen des Kraftfahrzeugs beziehungsweise der mobilen Kommunikationseinrichtung ausgewertet werden, um den Insassen zu identifizieren. Eine Berücksichtigung des Wohnorts kann zudem insbesondere im Rahmen der Ermittlung der Zielposition erfolgen. Können beispielsweise mehrere Krankenhäuser in ähnlicher Zeit erreicht werden, kann jenes Krankenhaus vorgezogen werden, das näher an dem Wohnort des Insassen liegt.

Eine Berücksichtigung der Identifikationsinformation im Rahmen der Auswertung der Freigabebedingungen kann beispielsweise derart erfolgen, dass historische Informationen über Vitalparameter des Insassen mit aktuellen, im Rahmen der Insasseninformation bereitgestellten Werten verglichen werden, um zu ermitteln, ob ein Notfall vorliegt. Beispielsweise können historische Werte für einen Blutdruck oder einen Puls gespeichert sein.

In dem erfindungsgemäßen Verfahren ist es möglich, dass während der vollautomatisierten Führung des Kraftfahrzeugs zu der Zielposition durch die Zentraleinrichtung oder eine Dritteinrichtung eine aktualisierte Zielposition an das Kraftfahrzeug übertragen wird, wonach die vollautomatisierte Führung derart fortgesetzt wird, dass das Kraftfahrzeug zu der aktualisierten Zielposition geführt wird. Die Dritteinrichtung kann beispielsweise eine Rettungsleitstelle oder ein Krankenwagen sein. Durch die Anpassung wird es ermöglicht, ein neues Ziel vorzugeben, wenn die ursprüngliche Zielposition, beispielsweise aufgrund eines Staus, durch das Kraftfahrzeug nur schlecht erreichbar ist. Stellte die ursprüngliche Zielposition beispielsweise einen Treffpunkt mit einem Krankenwagen oder einem anderen potentiell Hilfeleistenden dar, ist es auch möglich, die Zielposition anzupassen, wenn der Krankenwagen beziehungsweise der Hilfeleistende die ursprüngliche Zielposition nicht oder nur erheblich später erreichen kann, als ursprünglich prognostiziert.

Im Rahmen des erfindungsgemäßen Verfahrens kann eine voraussichtliche Ankunftszeit wenigstens eines potentiellen Hilfeleistenden an der Ist-Position des Kraftfahrzeugs und/oder eine voraussichtliche Zeitdauer bis zum Erreichen der Ist-Position durch den Hilfeleistenden ermittelt werden, wobei die Freigabebedingung von der Ankunftszeit und/oder von der Zeitdauer abhängt. Bei dem potentiellen Hilfeleistenden kann es sich beispielsweise um einen Krankenwagen oder einen Notarzt handeln. Die Freigabebedingung kann beispielsweise nur dann erfüllt sein, wenn ein Grenzwert durch die Ankunftszeit und/oder die Zeitdauer überschritten wurde und/oder dann wenn eine prognostizierte Zeit für das Erreichen einer Zielposition durch das Kraftfahrzeug, an der Hilfe möglich ist, kürzer ist als die Zeitdauer bis zum Ankommen des potentiellen Hilfeleistenden. Alternativ oder ergänzend ist es möglich, dass eine optimale Treffposition für das Kraftfahrzeug und den jeweiligen Hilfeleistenden ermittelt wird, indem eine Position ermittelt wird, die in minimaler Zeit sowohl durch das Kraftfahrzeug als auch durch den potentiellen Hilfeleistenden erreicht werden kann.

Bei Erfüllung der Freigabebedingung kann wenigstens eine Kommunikationseinrichtung des Kraftfahrzeugs aktiviert werden, um eine Kommunikation des Insassen mit der Zentraleinrichtung und/oder mit einer fahrzeugexternen Dritteinrichtung zu ermöglichen. Bei der Dritteinrichtung kann es sich um die vorangehend genannte Dritteinrichtung oder eine andere Dritteinrichtung handeln. Die Kommunikationseinrichtung kann insbesondere während der gesamten Führung zum Zielort aktiv bleiben. Die Kommunikationseinrichtung kann beispielsweise wenigstens ein Mikrofon und wenigstens einen Lautsprecher im Innenraum des Kraftfahrzeugs umfassen. Hierdurch kann erreicht werden, dass eine Kommunikation des Fahrzeuginsassen, beispielsweise mit einer Rettungsleitstelle oder einem anderen Hilfeleistenden, während der automatisierten Führung möglich ist.

Nach Erfüllung der Freigabebedingung kann wenigstens eine Hinweiseinrichtung des Kraftfahrzeugs angesteuert werden, um einen akustischen und/oder optischen Hinweis auf den vollautomatisierten Fahrbetrieb, der unabhängig von der Verkehrsregel oder in Abhängigkeit der modifizierten Fassung der Verkehrsregel erfolgt, an weitere Verkehrsteilnehmer zu geben. Eine entsprechende Hinweisgabe kann insbesondere während des gesamten vollautomatisierten Fahrbetriebs zu dem Zielort erfolgen. Da während des vollautomatisierten Fahrbetriebs zumindest einige Verkehrsregeln gebrochen werden können, ist es zweckmäßig, andere Verkehrsteilnehmer hierauf hinzuweisen.

Es kann wenigstens ein flächiges Leuchtelement mit einer dem Fahrzeugumfeld zugewandten Leuchtfläche als Hinweiseinrichtung angesteuert werden, wodurch eine Leuchtfarbe und/oder eine Leuchtintensität zumindest eines Abschnitts des Leuchtelements und/oder ein durch das Leuchtelement dargestelltes Muster einmalig oder wiederholt verändert werden. Als Leuchtfläche kann beispielsweise ein Karosserieabschnitt, ein Scheibenabschnitt oder ein anderer außenseitiger Abschnitt des Fahrzeugs genutzt werden.

Ergänzend oder alternativ kann ein Scheinwerfer als Hinweiseinrichtung angesteuert werden, wobei ein vorgegebenes Symbol in das Kraftfahrzeugumfeld projiziert wird. Das Symbol kann insbesondere auf eine Fahrbahnoberfläche projiziert werden. Es kann ortsfest bezüglich des Kraftfahrzeugs projiziert werden. Es ist auch möglich, dass zumindest in dem Fall, wenn, beispielsweise aus Navigationsdaten, ermittelt wird, dass sich das Kraftfahrzeug im Bereich eines ausgezeichneten Streckenabschnitts, beispielsweise einer Kreuzung, einer Einmündung oder eines Fußgängerüberwegs, befindet, das oder ein zusätzliches Symbol ortsfest bezüglich des entsprechenden Streckenabschnitts projiziert wird.

Als Symbol kann beispielsweise ein Kreuz projiziert werden. Die Projektion kann ein- oder mehrfarbig sein. Eine Projektion kann insbesondere durch einen kraftfahrzeugseitigen Laser erfolgen. Der Laser kann zur Darstellung des Symbols, beispielsweise über einen Drehspiegel, abgelenkt werden, oder es kann ein Brechungsgitter zur Darstellung des Symbols genutzt werden. Alternativ ist es möglich, andere Scheinwerfer zur Projektion dieses Symbols zu nutzen, beispielsweise Scheinwerfer, die Muster durch mehrere LEDs, eine insbesondere dynamisch anpassbare Maske im Strahlgang, ein Mikrospiegelarray oder Ähnliches darstellen können. Eine dynamische Maske kann beispielsweise durch ein LCD-Panel realisiert sein.

Es ist auch möglich, dass wenigstens ein in das Fahrzeugumfeld abstrahlender Lautsprecher des Kraftfahrzeugs als Hinweiseinrichtung angesteuert wird, wodurch ein akustisches Hinweissignal kontinuierlich oder wiederholt in das Kraftfahrzeugumfeld abgestrahlt wird. Derartige Lautsprecher sind beispielsweise in Elektro-Fahrzeugen ohnehin häufig vorgesehen, um ein simuliertes Fahrgeräusch in das Umfeld abzustrahlen und somit beispielsweise Fußgänger auf das Kraftfahrzeug aufmerksam zu machen. Entsprechende Lautsprecher können im Rahmen des Verfahrens angesteuert werden, um bestimmte Geräusche, Klänge und/oder Klanggemische beziehungsweise insbesondere periodische Abfolgen hiervon als Hinweis an das Umfeld abzustrahlen. Beispielsweise kann ein anhaltender Warnton oder ein sirenenartig veränderlicher Ton abgestrahlt werden.

Auch eine Warnblinkanlage des Kraftfahrzeugs kann als Hinweiseinrichtung angesteuert werden, wodurch mehrere der Warnblinkanlagen zugeordnete Leuchtmittel in einem vorgegebenen Rhythmus blinken. Dies ist vorteilhaft, da andere Verkehrsteilnehmer gewohnt sind, auf ein entsprechendes Warnblinken als Hinweis zu reagieren. Um zu verdeutlichen, dass es sich um eine besondere Warnung beziehungsweise einen Hinweis auf einen bestimmten Fahrbetrieb handelt, kann ein bestimmter Blinkrhythmus vorgegeben werden, der beispielsweise mehrere verschieden lange aufeinander folgende Blinkintervalle umfasst oder Ähnliches.

Die vorangehend erläuterten Hinweise sind besonders geeignet, um beispielsweise Fußgänger oder Fahrzeugführer auf den Fahrbetrieb des Kraftfahrzeugs hinzuweisen. Es kann jedoch gewünscht sein, gewisse technische Steuervorgänge für Infrastruktureinrichtungen oder in anderen Fahrzeugen direkt in Abhängigkeit eines entsprechenden Hinweises durchzuführen. Daher ist es im erfindungsgemäßen Verfahren möglich, dass während des vollautomatisierten Fahrbetriebs zu der Zielposition durch das Kraftfahrzeug und/oder durch die Zentraleinrichtung wenigstens eine Hinweisnachricht an wenigstens ein weiteres Kraftfahrzeug oder an wenigstens eine Ampelanlage gesendet wird, wobei wenigstens eine Kraftfahrzeugeinrichtung des weiteren Kraftfahrzeugs und/oder die Ampelanlage in Abhängigkeit des Empfangs der Hinweisnachricht gesteuert werden. Entsprechende Hinweisnachrichten können insbesondere an Ampelanlagen beziehungsweise weiteren Kraftfahrzeugen im Umfeld des Kraftfahrzeugs übertragen werden. Die Hinweisnachricht kann vorzugsweise weitere Informationen umfassen, beispielsweise eine geplante Trajektorie des Kraftfahrzeugs, so dass diese Informationen im Rahmen der Steuerung des weiteren Kraftfahrzeugs und/oder der Ampelanlage berücksichtigt werden können.

Die Steuerung der Kraftfahrzeugeinrichtung kann derart erfolgen, dass das weitere Kraftfahrzeug seine eigene Trajektorie anpasst, um ein zügiges Passieren des vollautomatisiert geführten Kraftfahrzeugs zu ermöglichen. Alternativ oder ergänzend ist es möglich, dass bei Empfang der Hinweisnachricht Hinweiseinrichtungen als Kraftfahrzeugeinrichtungen angesteuert werden, um einen Fahrer des weiteren Kraftfahrzeugs über den vollautomatisierten Fahrbetrieb und die hohe Priorität der Führung des vollautomatisiert fahrenden Kraftfahrzeugs zu unterrichten.

Eine Ampelanlage kann beispielsweise derart gesteuert werden, dass potentiell störender weiterer Verkehr aufgehalten wird beziehungsweise dass ein passieren des vollautomatisiert geführten Kraftfahrzeugs in einer Grünphase ermöglicht wird. Durch die verschiedenen Steuereingriffe kann eine Führung des Kraftfahrzeugs zu einer Zielposition und insbesondere die medizinische Versorgung des Insassen somit beschleunigt werden.

Neben dem erfindungsgemäßen Verfahren betrifft die Erfindung ein Kraftfahrzeug mit einer kraftfahrzeugseitigen Einrichtung, wobei das Kraftfahrzeug bei Erfüllung der Freigabebedingung durch die kraftfahrzeugseitige Einrichtung gemäß dem erfindungsgemäßen Verfahren vollautomatisiert zu dem Zielort führbar ist. Das erfindungsgemäße Kraftfahrzeug kann derart weitergebildet werden, dass einzelne oder alle Varianten des vorangehend geschilderten Verfahrens durchgeführt werden können. Hierzu kann das Kraftfahrzeug insbesondere eine Sensorik aufweisen, um einen Fahrerzustand zu erfassen. Zudem kann das Kraftfahrzeug eine Kommunikationseinrichtung zur Kommunikation mit einer Zentraleinrichtung und/oder mit weiteren Kraftfahrzeugen beziehungsweise mit Ampelanlagen umfassen. Zudem kann zumindest eine der vorangehend erläuterten Hinweiseinrichtungen vorgesehen sein, durch die ein akustischer und/oder optischer Hinweis an weitere Verkehrsteilnehmer gebbar ist.

Weitere Vorteile und Einzelheiten der Erfindung ergeben sich aus den folgenden Ausführungsbeispielen sowie de zugehörigen Zeichnungen. Hierbei zeigen schematisch:
- Fig. 1: eine Situation, in der ein Ausführungsbeispiel des erfindungsgemäßen Verfahrens durchgeführt wird,
- Fig. 2: ein Ausführungsbeispiel eines erfindungsgemäßen Kraftfahrzeugs, und
- Fig. 3: ein Ablaufdiagramm des in Fig. 1 durchgeführten Ausführungsbeispiels des erfindungsgemäßen Verfahrens.

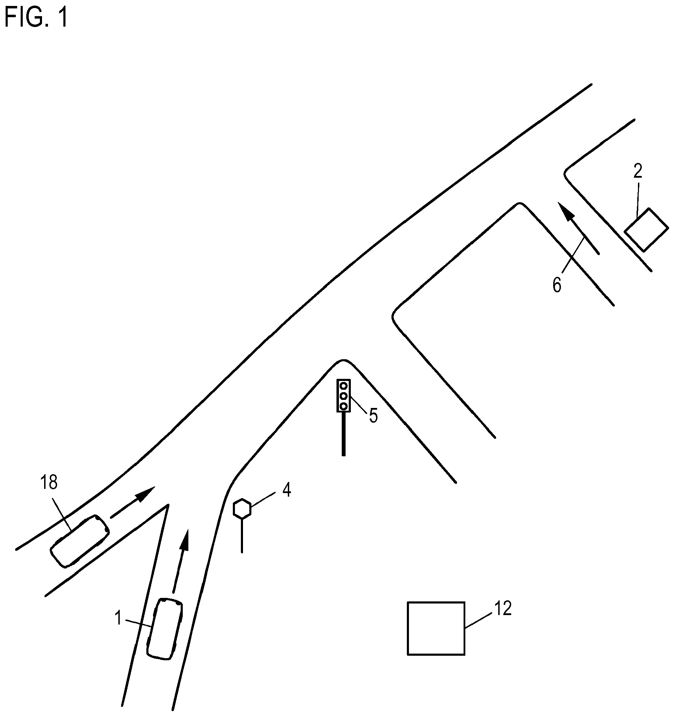

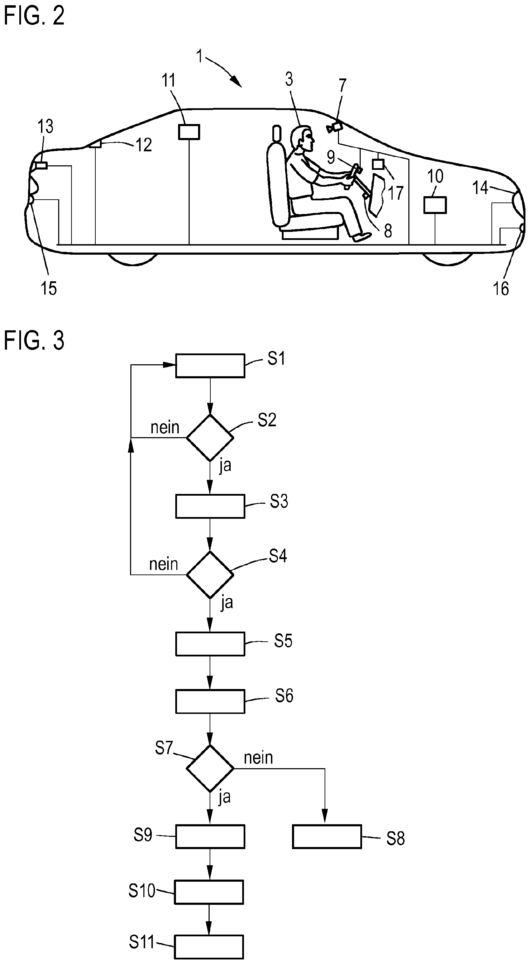

Fig. 1 zeigt eine Verkehrssituation, in der ein Kraftfahrzeug 1 in Abhängigkeit eines Insassenzustandes vollautomatisch zu einer Zielposition 2 geführt wird. Der Aufbau eines Kraftfahrzeugs 1 ist in Fig. 2 dargestellt. Die folgende Erläuterung erfolgt mit Bezug auf Fig. 3, die ein Ablaufdiagramm des Verfahrens darstellt.

In Schritt S1 erfolgt ein normaler Fahrbetrieb des Kraftfahrzeugs 1. Das Kraftfahrzeug 1 kann hierbei manuell durch den Insassen 3 geführt werden oder die Führung kann assistiert oder zumindest teilautomatisiert erfolgen. Die Führung des Kraftfahrzeugs 1 erfolgt hierbei gemäß vorgegebener, insbesondere gesetzlich vorgegebener, Verkehrsregeln. Diese geben für den momentan durch das Kraftfahrzeug 1 befahrenen Streckenabschnitt jeweils eine zulässige Fahrgeschwindigkeit für das Kraftfahrzeug 1 vor. Zudem können die Verkehrsregeln ein Anhalten des Kraftfahrzeugs an bestimmten Positionen und/oder in bestimmten Fahrsituationen vorgeben. Beispielsweise muss das Kraftfahrzeug beim Erreichen des Stoppschildes 4 an einer nicht gezeigten Haltelinie halten und bei einem Erreichen der Ampelanlage 5 müsste das Kraftfahrzeug anhalten, wenn diese Ampelanlage rot zeigt. Es ist auch möglich, dass die Verkehrsregeln die Befahrbarkeit bestimmter Bereiche einschränken. Beispielsweise handelt es sich bei der mit einem Pfeil in die vorgegebene Fahrtrichtung markierten Straße 6 um eine Einbahnstraße. Beim Betrieb des Kraftfahrzeugs gemäß der Verkehrsregeln kann dieser Bereich nicht entgegen dieser Fahrtrichtung befahren werden. Diese Verkehrsregeln werden bei einem manuellen Fahrbetrieb des Kraftfahrzeugs 1 durch den Insassen 3 befolgt. Es ist auch möglich, dass Fahrerassistenzsysteme des Kraftfahrzeugs 1 in den Fahrbetrieb eingreifen, um die Einhaltung dieser Verkehrsregeln zu unterstützen beziehungsweise sicherzustellen.

Während des Fahrbetriebs des Kraftfahrzeugs 1 wird ein Zustand des Insassen 3 durch mehrere Sensoren 7, 8, 9 erfasst, um eine diesen Zustand beschreibende Zustandsinformation zu ermitteln. Der Sensor 7 ist eine Kamera, der Sensor 8 erfasst Lenkbewegungen des Insassen 3 und durch den Sensor 9 sind durch eine Überwachung des Griffbereichs des Lenkrads Vitalparameter des Insassen 3, beispielsweise ein Puls sowie ein Hautwiderstand und eine Oberflächentemperatur der Haut erfassbar.

In Abhängigkeit dieser Sensordaten wird in Schritt S2 der Insassenzustand des Insassen 3 durch eine kraftfahrzeugseitige Einrichtung 10 klassifiziert und in Abhängigkeit dieser Klassifikation ermittelt, ob der Insasse 3 potentiell medizinisch Hilfe benötigt. Ist dies nicht der Fall, so wird das Verfahren ab Schritt S1 wiederholt.

Wurde ermittelt, dass der Insasse 3 potentiell medizinische Hilfe benötigt, so wird in Schritt S3 durch die kraftfahrzeugseitige Einrichtung 10 über die Kommunikationseinrichtung 11 eine den Zustand des Insassen 3 beschreibende Zustandsinformation an die Zentraleinrichtung 12 übermittelt. Die Zustandsinformation kann die vorher erfassten Sensordaten oder daraus abgeleitete Daten umfassen. Zusätzlich kann eine das Kraftfahrzeug 1 identifizierende Identifikationsinformation übermittelt werden, um eine gezielte Adressierung des Kraftfahrzeugs 1 durch die Zentraleinrichtung 12 zu ermöglichen. Ergänzend ist es möglich, dass eine den Insassen 3 identifizierende Identifikationsinformation übertragen wird. Diese kann beispielsweise im Rahmen der Auswertung der Zustandsinformation genutzt werden, um über Sensoren erfasste Werte mit historischen Werten, beispielsweise für den Puls des Insassen 3, zu vergleichen. Eine entsprechende Insassenidentifikationsinformation kann bekannt sein, wenn der Insasse 3 der Fahrer ist und einen personalisierten Fahrzeugschlüssel nutzt und/oder ein entsprechendes dem Fahrer zugeordnetes Fahrerprofil gewählt hat.

Die bisherige Erläuterung geht davon aus, dass die Klassifikation des Insassenzustandes und die Übermittlung einer entsprechenden Zustandsinformation automatisch und in Abhängigkeit von Sensordaten erfolgt. In einem alternativen Ausführungsbeispiel wäre es jedoch möglich, dass die Zustandsinformation manuell oder zumindest unter Mitwirkung des Insassen 3 oder eines weiteren Fahrzeuginsassen übertragen wird. Beispielsweise kann der Insasse 3 oder ein weiterer Insasse ein Bedienelement des Kraftfahrzeugs 1 betätigen, um die Übertragung der Zustandsinformation auszulösen. In diesem Fall kann im einfachsten Fall als Zustandsinformation übermittelt werden, dass überhaupt ein potentieller medizinischer Notfall vorliegt. Es ist jedoch auch möglich, diese Information weiter anzureichern, beispielsweise indem wie vorangehend erläutert Sensordaten erfasst werden und/oder indem beispielsweise über ein Dialogsystem weitere Informationen über den Zustand des Insassen 3 bereitgestellt werden und/oder indem die Zustandsinformation als Sprachnachricht im Rahmen eines Notrufs übertragen wird.

Nach dem Empfang der Zustandsinformation durch die Zentraleinrichtung 12 wird durch diese in Schritt S4 überprüft, ob eine medizinische Hilfe an den Insassen 3 bereitgestellt werden soll. Dies kann vollautomatisiert in Abhängigkeit der Zustandsinformation erfolgen. Verfahren hierfür sind im Stand der Technik grundsätzlich bekannt und sollen nicht detailliert erläutert werden. Es ist jedoch auch möglich, dass diese Überprüfung ganz oder teilweise durch einen menschlichen Auswerter durchgeführt wird. Dies ist beispielsweise dann vorteilhaft, wenn die Zustandsinformation als Sprache im Rahmen eines Notrufs übertragen wird. Wird ermittelt, dass keine medizinische Hilfe bereitgestellt werden soll, beispielsweise weil eine Fehlinterpretation der Sensordaten durch die kraftfahrzeugseitige Einrichtung 10 erfolgte oder weil versehentlich ein Notruf ausgelöst wurde, so wird das Verfahren ab Schritt S1 fortgesetzt.

Soll hingegen eine medizinische Hilfe für den Insassen 3 bereitgestellt werden, so wird in Schritt S5 zunächst eine Zielposition 2 ermittelt, an der eine entsprechende Hilfe bereitgestellt werden könnte. Hierzu können in der Zentraleinrichtung 12 Kartendaten gespeichert sein und es kann eine nächstliegende Position ermittelt werden, an der Hilfe bereitgestellt werden kann.

In Schritt S6 wird ermittelt, zu welchem Zeitpunkt beziehungsweise nach wie langer Zeit voraussichtlich eine Hilfeleistung an der momentanen Ist-Position des Kraftfahrzeugs 1 möglich ist. Hierzu kann die Zentraleinrichtung mit mehreren Rettungsfahrzeugen kommunizieren um deren Position zu erfassen. Durch gespeicherte Kartendaten kann, potentiell unter Berücksichtigung der Verkehrslage, eine voraussichtliche Dauer bis zum Erreichen der Ist-Position des Kraftfahrzeugs durch ein Rettungsfahrzeug ermittelt werden. Zudem wird eine Zeit berechnet, die das Kraftfahrzeug 1 voraussichtlich benötigen würde, um die Zielposition 2 zu erreichen. Im Rahmen der Prognose wird berücksichtigt, dass die Führung des Kraftfahrzeugs unter Vernachlässigung von zumindest Teilen der Verkehrsregeln erfolgen könnte, wie später noch genauer erläutert wird.

In Schritt S7 wird eine Zeitbedingung ausgewertet, die erfüllt ist, wenn die Zeit, die bis zum Bereitstellen von medizinischer Hilfe an der momentanen Ist-Position des Kraftfahrzeugs 1 verstreichen würde, um einen vorgegebenen Grenzwert länger ist als jene Zeit, die das Kraftfahrzeug 1 benötigen würde, um die Zielposition 2 zu erreichen. Ist die Zeitbedingung nicht erfüllt, so ist es zweckmäßig, das Kraftfahrzeug 1 an der Ist-Position anzuhalten beziehungsweise nicht von der Ist-Position wegzubewegen, da zeitnah medizinische Hilfe an dieser Position bereitgestellt werden kann. Daher wird das Kraftfahrzeug in Schritt S8 an der Ist-Position abgestellt und das Verfahren endet.

Wurde andererseits ermittelt, dass es zweckmäßig ist, das Kraftfahrzeug 1 vollautomatisch zu der Zielposition 2 zu bewegen, wird das Verfahren mit Schritt S9 fortgesetzt, um eine vollautomatische Führung zu der Zielposition 2 vorzubereiten. Die in Schritt S4 und in Schritt S7 überprüften Bedingungen bilden somit gemeinsam eine Freigabebedingung für die vollautomatisierte Führung des Kraftfahrzeugs 1 zu der Zielposition 2, die sowohl von den Zustandsinformationen abhängt, nämlich in Schritt S4, als auch von einer voraussichtlichen Zeitdauer bis zum Erreichen der Ist-Position des Kraftfahrzeugs 1 durch einen potentiellen Hilfeleistenden, nämlich in Schritt S7. In einer alternativen Variante des beschriebenen Verfahrens wäre es möglich, dass die Freigabebedingung ausschließlich von der Zustandsinformation abhängt und die Erreichbarkeit der Ist-Position durch potentielle Hilfeleistende somit unberücksichtigt bleibt. Es ist in einer weiteren Variante des Verfahrens auch möglich, dass die Überprüfung der Freigabebedingung im Kraftfahrzeug 1 selbst, beispielsweise durch die kraftfahrzeugseitige Einrichtung 10, erfolgt.

In Schritt S9 wird zunächst ein Freigabesignal von der Zentraleinrichtung 12 an das Kraftfahrzeug 1 gesendet. Nach Empfang des Freigabesignals durch die Kommunikationseinrichtung 11 wird die kraftfahrzeugseitige Einrichtung in Schritt S10 derart konfiguriert, dass anschließend eine vollautomatisierte Führung des Kraftfahrzeug 1 erfolgen kann, bei der zumindest eine der vorangehend diskutierten Verkehrsregel nicht beachtet oder abgewandelt wird. Es wird demnach ermöglicht, dass das Kraftfahrzeug beispielsweise mit einer Geschwindigkeit geführt wird, die oberhalb der zulässigen Fahrgeschwindigkeit liegt und/oder dass das Stoppschild 4 beziehungsweise die Ampelanlage 5 auch in dem Fall, wenn sie ein rotes Lichtsignal zeigt, ohne Anhalten überfahren werden und/oder dass das Kraftfahrzeug 1 entgegen der Fahrtrichtung der Einbahnstraße 6 geführt wird. In Schritt S11 wird das Kraftfahrzeug 1 anschließend zu der Zielposition 2 geführt. Aufgrund der Missachtung zumindest Teile der Verkehrsregeln kann das Kraftfahrzeug 1 deutlich schneller zu der Zielposition 2 geführt werden, als dies im regulären Fahrbetrieb möglich wäre.

In dem erläuterten Verfahren wird das Kraftfahrzeug 1 derart geführt, dass ein Verstoß gegen Verkehrsregeln möglich ist. Dies entspricht dem Prinzip einer Führung von Einsatzfahrzeugen mit Sonderrechten, aufgrund derer diese Einsatzfahrzeuge bestimmte Verkehrsregeln ignorieren können. Da eine entsprechende Führung des Kraftfahrzeugs 1 für weitere Verkehrsteilnehmer, beispielsweise das weitere Kraftfahrzeug 18, jedoch unerwartet ist, ist es vorteilhaft, diese weiteren Verkehrsteilnehmer hierauf hinzuweisen. Daher können nach Erfüllung der Freigabebedingung, insbesondere während des gesamten vollautomatisierten Fahrbetriebs zu dem Zielort 2, die Hinweiseinrichtungen 12 bis 14 sowie die Warnblinkanlage des Kraftfahrzeugs 1 angesteuert werden, um einen akustischen beziehungsweise optischen Hinweis auf den vollautomatisierten Fahrbetrieb zu geben. Die Hinweiseinrichtung 12 ist ein flächiges Leuchtelement mit einer dem Fahrzeugumfeld zugewandten Leuchtfläche. Dieses Leuchtelement kann derart angesteuert werden, dass eine Leuchtfarbe und/oder eine Leuchtintensität zumindest eines Abschnitts des Leuchtelements und/oder ein durch das Leuchtelement dargestelltes Muster einmalig oder wiederholt verändert werden.

Die Hinweiseinrichtung 14 ist ein Scheinwerfer, der ein vorgegebenes Symbol in das Kraftfahrzeugumfeld projizieren kann, um einen Hinweis auf den entsprechenden Fahrbetrieb zu geben. Die Projektion kann dadurch erfolgen, dass beispielsweise ein Laser ausreichend schnell abgelenkt wird, dass ein scheinbar stehendes Bild entsteht oder dass ein Muster durch eine ansteuerbare Blende, beispielsweise eine LCD-Blende oder ein Mikrospiegelarray, erzeugt wird.

Die Hinweiseinrichtung 13 ist ein in das Fahrzeugumfeld abstrahlender Lautsprecher, durch den ein akustisches Hinweissignal kontinuierlich oder wiederholt in das Kraftfahrzeugumfeld abgestrahlt werden kann. Als Hinweiseinrichtung sind zudem die Leuchtmittel 15, 16 einer Warnblinkanlage des Kraftfahrzeugs ansteuerbar, die bei dem vollautomatisierten Fahrbetrieb zu der Zielposition 2 in einem vorgegebenen Rhythmus blinken.

Um die Führung des Kraftfahrzeugs 1 zu der Zielposition 2 weiter zu beschleunigen, ist es möglich, dass während des vollautomatisierten Fahrbetriebs zu der Zielposition 2 durch das Kraftfahrzeug, nämlich durch die Kommunikationseinrichtung 11, Hinweisnachrichten an das weitere Kraftfahrzeug 18 und die Ampelanlage 5 gesendet werden. Anschließend kann eine Kraftfahrzeugeinrichtung des weiteren Kraftfahrzeugs 18 angesteuert werden, um derart in den Fahrbetrieb einzugreifen, dass der Fahrbetrieb des Kraftfahrzeugs 1 durch den Fahrbetrieb des weiteren Kraftfahrzeugs 18 nicht behindert wird. Alternativ kann die Kraftfahrzeugeinrichtung eine Hinweiseinrichtung sein, die einen entsprechenden Fahrhinweis an einen Fahrer des weiteren Kraftfahrzeugs 18 ausgibt. Die Ampelanlage kann nach Empfang der Hinweisnachricht derart gesteuert werden, dass sie beim Passieren des Kraftfahrzeugs 1 für dieses auf grün und für einbiegende beziehungsweise querende Verkehrsteilnehmer auf rot geschaltet wird. Zwar könnte das Kraftfahrzeug 1, wie bereits erläutert, auch eine Rotphase der Ampelanlage 5 ignorieren, durch ein entsprechendes Schalten der Ampelanlage werden jedoch andere Verkehrsteilnehmer bereits frühzeitig auf das Befahren des entsprechenden Bereichs durch das Kraftfahrzeug 1 hingewiesen.

Während des automatisierten Fahrbetriebs wird zudem eine Kommunikationseinrichtung 17 im Innenraum des Kraftfahrzeugs, beispielsweise eine Freisprecheinrichtung, automatisch aktiviert, um eine Kommunikation des Insassen 3 mit einer Rettungsdienststelle zu ermöglichen.

In der bisherigen Schilderung wurde davon ausgegangen, dass es sich bei der Zielposition 2 um ein Krankenhaus handelt. Es ist jedoch auch möglich, dass die Zielposition 2 derart gewählt wird, dass an dieser ein besonders zeiteffizientes Treffen mit einem potentiellen Helfer, beispielsweise einem Krankenwagen, möglich ist. Ergänzend kann die Zielposition während der vollautomatisierten Führung des Kraftfahrzeugs 1 zu der Zielposition 2 auch angepasst werden. Dies ist beispielsweise dann möglich, wenn ein anderes Krankenhaus angesteuert werden soll oder wenn, beispielsweise aufgrund einer Verkehrslage, ein zuvor als günstiger beurteilter Treffpunkt mit einem Krankenwagen sich als ungünstig herausstellt.

## Patentansprüche

1. Verfahren zum Betrieb eines Kraftfahrzeugs (1), wobei eine Zustandsinformationen, die einen Zustand eines Insassen (3) des Kraftfahrzeugs (1) betrifft, ermittelt wird, wonach das Kraftfahrzeug (1) bei Erfüllung einer von der Zustandsinformationen abhängenden Freigabebedingung vollautomatisiert zu einer vorgegebenen Zielposition (2) geführt wird,
**dadurch gekennzeichnet,**
**dass** das Kraftfahrzeug (1) bei Erfüllung der Freigabebedingung unabhängig von wenigstens einer Verkehrsregel, die den Fahrbetrieb des Kraftfahrzeugs (1) bei Nichterfüllung der Freigabebedingung einschränkt, oder in Abhängigkeit einer modifizierten Fassung dieser Verkehrsregel geführt wird.

2. Verfahren nach Anspruch 1,
**dadurch gekennzeichnet,**
**dass** die Verkehrsregel dauerhaft und/oder fahrsituationsbedingt eine maximal zulässige Fahrgeschwindigkeit des Kraftfahrzeugs (1) und/oder eine Befahrbarkeit bestimmter Bereiche durch das Kraftfahrzeug (1) und/oder ein Anhalten des Kraftfahrzeugs (1) an bestimmten Positionen vorgibt.

3. Verfahren nach Anspruch 1 oder 2,
**dadurch gekennzeichnet,**
**dass** die Zustandsinformation durch eine kraftfahrzeugseitige Einrichtung (10) oder durch eine mobile Kommunikationseinrichtung erfasst und an eine Zentraleinrichtung (12) übermittelt wird, wonach die Freigabebedingung durch die Zentraleinrichtung (12) oder einen zentraleinrichtungsseitigen Auswerter überprüft wird, wobei bei Erfüllung der Freigabebedingung ein Freigabesignal an das Kraftfahrzeug (1) übermittelt wird, wobei das Kraftfahrzeug (1) nach Empfang des Freigabesignals unabhängig von der Verkehrsregel oder in Abhängigkeit der modifizierten Fassung der Verkehrsregel vollautomatisiert zu der Zielposition (2) geführt wird.

4. Verfahren nach einem der vorangehenden Ansprüche,
**dadurch gekennzeichnet,**
**dass** zusätzlich zu der Zustandsinformation eine das Kraftfahrzeug (1) und/oder den Insassen (3) und/oder einen Fahrzeughalter des Kraftfahrzeugs (1) und/oder einen Wohnort des Insassen (3) und/oder des Fahrzeughalters identifizierende Identifikationsinformation ermittelt wird, wobei die Zielposition (2) und/oder die Erfüllung der Freigabebedingung von der Identifikationsinformation abhängen und/oder wobei in Abhängigkeit der Identifikationsinformation eines von mehreren Kraftfahrzeugen (1) ausgewählt wird, zu dem das Freigabesignal übermittelt wird und das zu der Zielposition (3) geführt wird.

5. Verfahren nach einem der vorangehenden Ansprüche,
**dadurch gekennzeichnet,**
**dass** während der vollautomatisierten Führung des Kraftfahrzeugs (1) zu der Zielposition (3) durch die Zentraleinrichtung (12) oder eine Dritteinrichtung eine aktualisierte Zielposition an das Kraftfahrzeug (1) übertragen wird, wonach die vollautomatisierte Führung derart fortgesetzt wird, dass das Kraftfahrzeug (1) zu der aktualisierten Zielposition geführt wird.

6. Verfahren nach einem der vorangehenden Ansprüche,
**dadurch gekennzeichnet,**
**dass** eine voraussichte Ankunftszeit wenigstens eines potentiellen Hilfeleistenden an der Ist-Position des Kraftfahrzeugs (1) und/oder eine voraussichtliche Zeitdauer bis zum Erreichen der Ist-Position durch den Hilfeleistenden ermittelt wird, wobei die Freigabebedingung von der Ankunftszeit und/oder von der Zeitdauer abhängt.

7. Verfahren nach einem der vorangehenden Ansprüche,
**dadurch gekennzeichnet,**
**dass** bei Erfüllung der Freigabebedingung wenigstens eine Kommunikationseinrichtung (17) des Kraftfahrzeugs aktiviert wird, um eine Kommunikation des Insassen (3) mit der Zentraleinrichtung (12) und/oder einer fahrzeugexternen Dritteinrichtung zu ermöglichen.

8. Verfahren nach einem der vorangehenden Ansprüche,
**dadurch gekennzeichnet,**
**dass** nach Erfüllung der Freigabebedingung wenigstens eine Hinweiseinrichtung (12 - 14) des Kraftfahrzeugs (1) angesteuert wird, um einen akustischen und/oder optischen Hinweis auf den vollautomatisierten Fahrbetrieb, der unabhängig von der Verkehrsregel oder in Abhängigkeit der modifizierten Fassung der Verkehrsregel erfolgt, an weitere Verkehrsteilnehmer zu geben.

9. Verfahren nach Anspruch 8,
**dadurch gekennzeichnet,**
**dass** wenigstens ein flächiges Leuchtelement mit einer dem Fahrzeugumfeld zugewandten Leuchtfläche als Hinweiseinrichtung (12) angesteuert wird, wodurch eine Leuchtfarbe und/oder eine Leuchtintensität zumindest eines Abschnitts des Leuchtelements und/oder ein durch das Leuchtelement dargestelltes Muster einmalig oder wiederholt verändert werden.

10. Verfahren nach Anspruch 8 oder 9,
**dadurch gekennzeichnet,**
**dass** wenigstens ein Scheinwerfer als Hinweiseinrichtung (14) angesteuert wird, wodurch ein vorgegebenes Symbol in das Kraftfahrzeugumfeld projiziert wird, und/oder dass wenigstens ein in das Fahrzeugumfeld abstrahlender Lautsprecher des Kraftfahrzeugs als Hinweiseinrichtung (13) angesteuert wird, wodurch ein akustisches Hinweissignal kontinuierlich oder wiederholt in das Kraftfahrzeugumfeld abgestrahlt wird, und/oder dass eine Warnblinkanlage des Kraftfahrzeugs als Hinweiseinrichtung angesteuert wird, wodurch mehrere der Warnblinkanlage zugeordnete Leuchtmittel (15, 16) in einem vorgegebenen Rhythmus blinken.

11. Verfahren nach einem der vorangehenden Ansprüche,
**dadurch gekennzeichnet,**
**dass** während des vollautomatisierten Fahrbetriebs zu der Zielposition (2) durch das Kraftfahrzeugs (1) und/oder durch die Zentraleinrichtung (12) wenigstens eine Hinweisnachricht an wenigstens ein weiteres Kraftfahrzeug (18) oder an wenigstens eine Ampelanlage (5) gesendet wird, wobei wenigstens eine Kraftfahrzeugeinrichtung des weiteren Kraftfahrzeugs (18) und/oder die Ampelanlage (5) in Abhängigkeit des Empfangs der Hinweisnachricht gesteuert werden.

12. Kraftfahrzeug mit einer kraftfahrzeugseitige Einrichtung (10),
**dadurch gekennzeichnet,**
**dass** das Kraftfahrzeug (1) bei Erfüllung der Freigabebedingung durch die kraftfahrzeugseitige Einrichtung (10) gemäß dem Verfahren nach einem der vorangehenden Ansprüche vollautomatisiert zu dem Zielort (2) führbar ist.

## Claims

1. Method for operating a motor vehicle (1), wherein status information regarding the status of an occupant (3) of the motor vehicle (1) is determined, whereupon the motor vehicle (1) is guided in a fully automated manner to a predetermined target position (2), when a release condition dependent on the status information is fulfilled, **characterised in**
**that** when the release condition is fulfilled, the motor vehicle (1) is guided, independent of at least one traffic rule, which restricts the driving operation of the motor vehicle (1) in the event of non-compliance with the release condition, or dependent on a modified version of said traffic rule.

2. Method according to claim 1,
**characterised in**
**that** the traffic rule specifies, permanently and/or in a driving-situation-related manner, a maximum permissible driving speed for the motor vehicle (1) and/or the navigability of certain areas by the motor vehicle (1) and/or stopping of the motor vehicle (1) in certain locations.

3. Method according to claim 1 or 2,
**characterised in**
**that** the status information is recorded by a device in the motor vehicle (10) or by a mobile communication device and is transmitted to a central device (12), whereupon the release condition is checked by the central device (12) or an analyser incorporated into the central device, wherein, when the release condition is fulfilled, a release signal is transmitted to the motor vehicle (1), wherein the motor vehicle (1) is guided in a fully automated manner to the target position (2) following receipt of the release signal independent of the traffic rule or dependent on the modified version of the traffic rule.

4. Method according to any of the preceding claims,
**characterised in**
**that**, in addition to the status information, identification information identifying a motor vehicle (1) and/or the occupant (3) and/or a vehicle owner of the motor vehicle (1) and/or a place of residence for the occupant (3) and/or the vehicle owner is determined, wherein the target position (2) and/or fulfilment of the release condition depend on the identification information and/or wherein, depending on the identification information, one of several motor vehicles (1) is selected, to which the release signal is transmitted and which is guided to the target position (3).

5. Method according to any of the preceding claims,
**characterised in**
**that**, during fully automated guidance of the motor vehicle (1) to the target position (3) by the central device (12) or a third party device, an updated target position is transmitted to the motor vehicle (1), whereupon fully automated guidance is continued such that the motor vehicle (1) is guided to the updated target position.

6. Method according to any of the preceding claims,
**characterised in**
**that** an anticipated arrival time of at least one potential assistant at the actual position of the motor vehicle (1) and/or an anticipated time to arrival at the actual position by the assistant is determined, wherein the release condition depends on the arrival time and/or the time to arrival

7. Method according to any of the preceding claims,
**characterised in**
**that**, when the release condition is fulfilled, at least one communication device (17) is activated in the motor vehicle, to facilitate communication by the occupant (3) with the central device (12) and/or a third party device outside the vehicle.

8. Method according to any of the preceding claims,
**characterised in**
**that**, after the release condition is fulfilled, at least one indicator device (12-14) of the motor vehicle (1) is actuated, to provide other road users with an acoustic and/or visual indication of fully automated driving mode, which takes place independent of the traffic rule or dependent on the modified version of the traffic rule.

9. Method according to claim 8,
**characterised in**
**that** at least one flat lighting element is actuated with an illuminated area directed onto the vehicle's surroundings as an indicator device (12), whereby a lighting colour and/or a lighting intensity of at least one section of the lighting element and/or a pattern represented by the lighting element is changed once or repeatedly.

10. Method according to claim 8 or 9,
**characterised in**
**that** at least one headlight is actuated as an indicator device (14), whereby a predetermined symbol is projected onto the motor vehicle's surroundings, and/or that at least one speaker broadcasting into the motor vehicle's surroundings is actuated as an indicator device (13), whereby an acoustic indicator signal is emitted continuously or repeatedly into the motor vehicle's surroundings, and/or that one of the motor vehicle's hazard warning lights is actuated as an indicator device, whereby several lights (15, 16) assigned to the hazard warning light system flash in a predetermined rhythm.

11. Method according to any of the preceding claims,
**characterised in**
**that**, during fully automated driving to the target position (2) by the motor vehicle (1) and/or by the central device (12), at least one information message is sent to at least one other motor vehicle (18) or to at least one traffic light (5), wherein at least one motor vehicle device in the other motor vehicle (18) and/or the traffic light (5) is controlled as the result of receiving the information message.

12. Motor vehicle with a device in the motor vehicle (10),
**characterised in**
**that**, when the release condition is fulfilled, the motor vehicle (1) can be guided by the device in the motor vehicle (10) in a fully automated matter to the target position (2) in accordance with the method according to any of the preceding claims.

## Revendications

1. Procédé de fonctionnement d'un véhicule automobile (1), dans lequel on détermine une information d'état, qui concerne un état d'un occupant (3) du véhicule automobile (1), à la suite de quoi le véhicule automobile (1) est conduit de manière entièrement automatisée jusqu'à une destination prédéterminée (2) lorsqu'une condition d'autorisation dépendant de l'information d'état est satisfaite,
**caractérisé en ce que**, lorsque la condition d'autorisation est satisfaite, le véhicule automobile (1) est conduit indépendamment d'au moins une règle de circulation, qui limite la conduite du véhicule automobile (1) lorsque la condition d'autorisation n'est pas satisfaite, ou en fonction d'une version modifiée de cette règle de circulation.

2. Procédé selon la revendication 1, **caractérisé en ce que** la règle de circulation prescrit durablement et/ou en fonction du trafic une vitesse maximale autorisée du véhicule automobile (1) et/ou une circulation du véhicule automobile (1) dans certaines zones et/ou un arrêt du véhicule automobile (1) à certains endroits.

3. Procédé selon la revendication 1 ou 2,
**caractérisé en ce que** l'information d'état est détectée par un dispositif (10) côté véhicule automobile ou par un dispositif de communication mobile et est transmise à un dispositif central (12), à la suite de quoi la condition d'autorisation est vérifiée par le dispositif central (12) ou par un évaluateur côté dispositif central,
dans lequel, lorsque la condition d'autorisation est satisfaite, un signal d'autorisation est transmis au véhicule automobile (1),
dans lequel, après la réception du signal d'autorisation, le véhicule automobile (1) est conduit de manière entièrement automatisée jusqu'à la destination (2) indépendamment de la règle de circulation ou en fonction de la version modifiée de la règle de circulation.

4. Procédé selon l'une quelconque des revendications précédentes,
**caractérisé en ce que**, en plus de l'information d'état, on détermine une information d'identification identifiant le véhicule automobile (1) et/ou l'occupant (3) et/ou un détenteur du véhicule automobile (1) et/ou un domicile de l'occupant (3) et/ou du détenteur du véhicule automobile,
dans lequel la destination (2) et/ou la satisfaction de la condition d'autorisation dépendent de l'information d'identification et/ou
dans lequel, en fonction de l'information d'identification, un véhicule automobile (1) est sélectionné parmi plusieurs, véhicule automobile auquel le signal d'autorisation est transmis et qui est conduit à la destination (3).

5. Procédé selon l'une quelconque des revendications précédentes, **caractérisé en ce que**, pendant la conduite entièrement automatisée du véhicule automobile (1) jusqu'à la destination (3), une destination actualisée est transmise par le dispositif central (12) ou par un dispositif tiers au véhicule automobile (1), à la suite de quoi la conduite entièrement automatisée se poursuit de telle sorte que le véhicule automobile (1) est conduit jusqu'à la destination actualisée.

6. Procédé selon l'une quelconque des revendications précédentes, **caractérisé en ce qu'**on détermine un instant d'arrivée prévu d'au moins un secours potentiel à la position réelle du véhicule automobile (1) et/ou une durée prévue jusqu'à ce que la position réelle soit atteinte par le secours, la condition d'autorisation dépendant alors de l'instant d'arrivée et/ou de la durée.

7. Procédé selon l'une quelconque des revendications précédentes, **caractérisé en ce que**, lorsque la condition d'autorisation est satisfaite, au moins un dispositif de communication (17) du véhicule automobile est activé afin de permettre une communication entre l'occupant (3) et le dispositif central (12) et/ou un dispositif tiers externe au véhicule.

8. Procédé selon l'une quelconque des revendications précédentes, **caractérisé en ce que**, après que la condition d'autorisation a été satisfaite, au moins un dispositif d'avertissement (12 à 14) du véhicule automobile (1) est commandé afin d'envoyer à d'autres usagers de la route un avertissement acoustique et/ou optique concernant la conduite entièrement automatisée qui s'effectue indépendamment de la règle de circulation ou en fonction de la version modifiée de la règle de circulation.

9. Procédé selon la revendication 8, **caractérisé en ce qu'**au moins un élément d'éclairage plat avec une surface d'éclairage tournée vers l'environnement du véhicule est commandé en tant que dispositif d'avertissement (12), une couleur d'éclairage et/ou une intensité d'éclairage d'au moins une partie de l'élément d'éclairage et/ou un motif représenté par l'élément d'éclairage étant alors modifiés une fois ou de manière répétée.

10. Procédé selon la revendication 8 ou 9, **caractérisé en ce qu'**au moins un projecteur est commandé comme dispositif d'avertissement (14), un symbole prédéterminé étant alors projeté dans l'environnement du véhicule automobile, et/ou **en ce qu'**au moins un haut-parleur du véhicule automobile émettant dans l'environnement du véhicule est commandé comme dispositif d'avertissement (13), un signal d'avertissement acoustique étant alors émis de façon continue ou répétée dans l'environnement du véhicule automobile, et/ou **en ce qu'**un système de feux de détresse du véhicule automobile est commandé comme dispositif d'avertissement, plusieurs dispositifs d'éclairage (15, 16) associés au système de feux de détresse clignotant alors suivant un rythme prédéterminé.

11. Procédé selon l'une quelconque des revendications précédentes, **caractérisé en ce que**, pendant la conduite entièrement automatisée jusqu'à la destination (2), au moins un message d'avertissement est envoyé par le véhicule automobile (1) et/ou par le dispositif central (12) à au moins un autre véhicule automobile (18) ou à au moins un feu de signalisation (5) et au moins un dispositif de véhicule automobile de l'autre véhicule automobile (18) et/ou le feu de signalisation (5) sont commandés en fonction de la réception du message d'avertissement.

12. Véhicule automobile avec un dispositif (10) côté véhicule automobile, **caractérisé en ce que**, lorsque la condition d'autorisation est satisfaite, le véhicule automobile (1) peut être conduit de manière entièrement automatisée jusqu'à la destination (2) par le dispositif (10) côté véhicule automobile selon le procédé selon l'une quelconque des revendications précédentes.
